(19) Europäisches Patentamt

European Patent Office

Office européen des brevets

(11) Veröffentlichungsnummer: **0 506 668 B1**

(12) **EUROPÄISCHE PATENTSCHRIFT**

(45) Veröffentlichungstag der Patentschrift: **24.08.94**

(21) Anmeldenummer: **90915994.9**

(22) Anmeldetag: **10.11.90**

(86) Internationale Anmeldenummer:
**PCT/DE90/00858**

(87) Internationale Veröffentlichungsnummer:
**WO 91/09219 (27.06.91 91/14)**

(51) Int. Cl.⁵: **F02D  41/14**

(54) **VERFAHREN UND VORRICHTUNG ZUR ÜBERWACHUNG DER FUNKTIONSFÄHIGKEIT EINER SONDEN-HEIZEINRICHTUNG.**

(30) Priorität: **20.12.89 DE 3941995**

(43) Veröffentlichungstag der Anmeldung:
**07.10.92 Patentblatt  92/41**

(45) Bekanntmachung des Hinweises auf die Patenterteilung:
**24.08.94 Patentblatt  94/34**

(84) Benannte Vertragsstaaten:
**DE FR**

(56) Entgegenhaltungen:
**EP-A- 0 005 613**
**EP-A- 0 068 323**

**Patent Abstracts of Japan, Band 9, Nr. 133 (P-362)(1856), 8. Juni 1985, & JP-A-6017349 (NISSAN JIDOSHA K.K.) 29. Januar 1985**

**Patent Abstracts of Japan, Band 9, Nr. 238 (M-416)(1961), 25. September 1985, & JP-A-6093140 (TOYOTA JIDOSHA K.K.) 24. Mai 1985**

(73) Patentinhaber: **ROBERT BOSCH GMBH**
**Postfach 30 02 20**
**D-70442 Stuttgart (DE)**

(72) Erfinder: **WERNER, Peter**
**Im Sommerrain 15**
**D-7135 Wiernsheim-Iptingen (DE)**
Erfinder: **HEMMINGER, Hermann**
**Wettegasse 6**
**D-7145 Markgröningen (DE)**
Erfinder: **SCHWEIGGART, Hubert**
**Wilhelm-Blos-Str. 12**
**D-7000 Stuttgart 1 (DE)**
Erfinder: **WERNER, Andreas**
**Zeppelinstr. 10/2**
**D-7313 Reichenbach (DE)**

## Beschreibung

### Stand der Technik

Das erfindungsgemäße Verfahren nach dem Hauptanspruch und die zur Durchführung des Verfahrens angegebene Vorrichtung gemäß dem ersten Vorrichtungsanspruch beziehen sich auf die Überwachung der Funktionsfähigkeit einer Sonden-Heizeinrichtung, die mindestens aus einer Sondenheizung, mindestens einer Einrichtung, die die Sondenheizung mit elektrischer Leistung versorgt, und den dazugehörigen Zuleitungen besteht.

Es ist bekannt, zur Einhaltung eines bestimmten Luft/Kraftstoffverhältnisses des einer Brennkraftmaschine zugeführten Luft/Kraftstoffgemisches Regeleinrichtungen vorzusehen, die ihre Regelgröße von einer im Abgassystem der Brennkraftmaschine angeordneten Sauerstoffmeßsonde erhalten. Dabei wird diese Regelung im allgemeinen einer bekannten Gemischsteuervorrichtung, mit der die Zusammensetzung des Luft/Kraftstoffgemisches grob vorgesteuert wird, überlagert. Die Voraussetzung zum einwandfreien Funktionieren einer solchen Regeleinrichtung ist, daß auch die Sauerstoffmeßsonde einwandfrei arbeitet. Bei den bekannten Sauerstoffmeßsonden ist die Funktionsbereitschaft erst ab einer bestimmten Betriebstemperatur gewährleistet.

Deshalb muß für den Kaltstart und den Warmlauf der Brennkraftmaschine bei Sonden, die nur durch die Abgase der Brennkraftmaschine aufgeheizt werden, eine Gemischsteuerung vorgesehen werden, die erst bei Erreichen der mit der Betriebstemperatur der Brennkraftmaschine steigenden Sondentemperatur durch die Gemischregelung ersetzt wird.

Nach der EP-A- 68 323 wird der Heizstrom für einen Lambda-Sensor erfaßt und mit einem Grenzwert auf Plausibilität geprüft. Wird der Grenzwert überschritten wird eine Fehlermeldung angezeigt und der Strom zum Sensor wird unterbrochen.

Nach dem SAE-paper 830527 und dem VDI-Berichte 687,1988, S.349- 357, VDI-Verlag Düsseldorf werden Sensor-Meßwerte nicht nur auf einen zu hohen (niedrigen) Wert hin überprüft, sondern es wird jeweils ein Bereich von Werten mit einer oberen und einer unteren Grenze festgelegt und geprüft, ob Sensor-Meßwerte in dem Bereich liegen.

Aus der DE-OS 31 17 790 ist ein Verfahren und eine Vorrichtung zur Temperaturregelung einer Abgassonde bekannt, die den temperaturabhängigen elektrischen Widerstand der Sauerstoffmeßsonde in ein Temperatursignal umwandeln und daraufhin eine Heizvorrichtung zur Beheizung der Abgassonde ansteuern. Dadurch läßt sich die Betriebstemperatur der Abgassonde auf einfache Art und Weise und ohne zusätzliche Fühler und Meßleitungen konstant halten.

Damit der Abgassensor seine Betriebstemperatur möglichst schnell erreicht und anschließend auch auf einer vorgegebenen Temperatur gehalten werden kann, ist die Funktionsbereitschaft der Sondenheizung Voraussetzung.

Weiterhin kann die Abgassonde zerstört werden, wenn durch sie ein Strom fließt, dessen Wert größer ist als der eines maximal zulässigen Stromes.

In der EP-A- 440 757 ist bereits ein System zur Überwachung der Funktionsfähigkeit einer Heizung für eine Abgassonde vorgestellt worden. Dabei wird die Betriebsbereitschaft der Abgassonde überwacht und in Abhängigkeit vom zeitlichen Verlauf zwischen Einschalten der Sondenheizung und Erkennen auf Betriebsbereitschaft auf die Funktionsfähigkeit der Sondenheizung geschlossen.

Fließt jedoch durch die Abgassonde ein Strom, dessen Wert oberhalb eines erlaubten Bereiches liegt, so wird dies durch das System der genannten Anmeldung nicht sofort, sondern erst bei einem eventuellen Totalausfall der Abgassonde erkannt.

### Vorteile der Erfindung

Das erfindungsgemäße Verfahren mit den Merkmalen des Hauptanspruchs und die zur Durchführung des Verfahrens erforderliche Vorrichtung mit den Merkmalen des ersten Vorrichtungsanspruchs haben den Vorteil, daß sie den durch die Sondenheizung fließenden Strom derart überwachen, daß sowohl ein zu hoher als auch ein zu niedriger Strom durch die Sondenheizung erkannt wird. Vorteilhafte Weiterbildungen und Ausgestaltungen sind Gegenstand der Unteransprüche.

Nur wenn die Sondenheizung ordnungsgemäß funktioniert, kann sichergestellt werden, daß die Abgassonde einerseits schnell ihren Betriebstemperaturbereich erreicht und während des Betriebes auch beibehält und andererseits nicht durch einen zu hohen Strom überhitzt wird.

Im ersten Fall erwärmt sich die Sonde in Abhängigkeit von der Abgastemperatur und -Zusammensetzung wesentlich langsamer und kann, beispielsweise im Schubbetrieb, auch wieder abkühlen. Das führt dazu, daß das Verhältnis des der Brennkraftmaschine zugeführten Luft/Kraftstoffgemisches häufiger durch Steuerungsbetrieb bestimmt wird, durch den das gewünschte Luft/Kraftstoffverhältnis nicht so genau eingehalten werden kann, wie durch Regelungsbetrieb. Das hat Abgasemissionen mit einem höheren Anteil schädlicher Bestandteile zur Folge.

Im zweiten Fall, also bei Überhitzung der Sonde, kann diese in ihrer Betriebsfähigkeit und ihrem Meßverhalten beeinträchtigt werden, wodurch ihr Ausgangssignal verfälscht werden kann. Auch ist es möglich, daß die Sonde zerstört wird, wodurch ein Austausch derselben erforderlich wird mit einem entsprechenden Kostenaufwand.

Wird jedoch durch das erfindungsgemäße Verfahren festgestellt, daß der Sondenstrom nicht innerhalb vorgegebener Grenzen liegt, kann dieses Ergebnis durch eine Anzeigevorrichtung dem Fahrer bekanntgegeben, in einen Speicher abgespeichert und/oder eine Einrichtung, die die Sondenheizung mit elektrischer Leistung versorgt, von dieser getrennt werden. So kann der Fahrer entsprechende Maßnahmen zur Wiederherstellung der Funktionbereitschaft der Sondenheizung ergreifen und es wird eine eventuelle Zerstörung der Sonde durch Überhitzung vermieden.

Dadurch werden Forderungen der kalifornischen Umweltbehörde CARB erfüllt, die verlangt, daß der Ausfall abgasrelevanter Teile (dazu gehört die Sondenheizung) erkannt und angezeigt wird.

Zeichnung

Ausführungsbeispiele sind in der Zeichnung dargestellt und in der folgenden Beschreibung näher erläutert.
Es zeigen

Figur 1: stark schematisiert in Form eines Blockschaltbildes eine mögliche Realisierungsform von elektronischen und elektrischen Regelungs- und Steuerelementen sowie Stellgliedern für den Betrieb einer Brennkraftmaschine,

Figur 2: die Vorrichtung zur Überwachung des Stromes durch die Sondenheizung, fließenden Stromes,

Figuren 3-5: Flußpläne verschiedener Versionen des Überwachungsverfahrens.

Beschreibung der Ausführungsbeispiele

Der Grundgedanke vorliegender Erfindung besteht darin, daß die Spannung (Meßspannung UM), die an einem in Reihe mit der Sondenheizung geschalteten Widerstand (Meßwiderstand) bei Fließen eines Heizstromes IH abfällt, erfaßt und ausgewertet wird.

Da besonders während der Aufheizphase recht große Ströme durch die Sondenheizung und damit auch durch den Meßwiderstand, fließen, verursacht die an ihm abfallende Spannung eine Wärmeleistung von

$$P = UM * IH \text{ bzw. } P = RM * IH^2.$$

Das heißt, je höher die zur Messung zur Verfügung stehende Spannung UM beziehungsweise je höher der Widerstandswert RM des Meßwiderstandes ist, desto höher wird die Leistung P und desto geringer wird andererseits die der Sondenheizung zur Verfügung stehende Spannung, da der Meßwiderstand und der Innenwiderstand der Sondenheizung einen Spannungsteiler bilden.

Weist der Meßwiderstand einen kleinen Widerstandswert RM auf, wird zwar auch die an ihm abfallende Spannung UM, und damit auch die an ihm abfallende Leistung P, geringer. Andererseits aber wird bei kleinen Meßspannungen UM auch der Meßfehler, unter anderem verursacht durch Toleranzen der verwendeten Meßeinrichtungen, größer.

Durch Vergleich der Meßspannung UM mit einer weiteren Spannung UR (Referenzspannung), die von einem Referenzelement abgegeben wird, das auf ähnlicher Temperatur gehalten wird wie der Meßwiderstand oder ein entsprechendes Temperatursignal erhält und deren Spannung UR ein ähnliches Temperaturverhalten aufweist wie das der Meßspannung UM, ist auch bei sehr kleinen Meßspannungen UM eine sichere Aussage über den durch die Sondenheizung fließenden Strom möglich. Dadurch ist eine Diagnose der gesamten Heizeinrichtung, die mindestens aus der Sondenheizung, einer Einrichtung, die die Sondenheizung mit der nötigen elektrischen Leistung versorgt, und den dazugehörigen Zuleitungen besteht, möglich.

Das Referenzelement kann beispielsweise ein zweiter Widerstand (Referenzwiderstand) sein, dem ein vorgegebener Strom eingeprägt wird, dessen Temperaturverhalten dem des Meßwiderstandes entspricht und der auf einer ähnlichen Temperatur gehalten wird.

Dieses wird bevorzugt dadurch erreicht, daß der Meßwiderstand und der Referenzwiderstand als Schichtwiderstände gestaltet sind.

Unter Schichtwiderständen (Dünn-/ Dickschichtwiderständen) sind elektrische Widerstände zu verstehen, die durch eine Strukturierung eines elektrisch leitenden Materials ( z. B. Metall) hergestellt wurden. Dieses elektrisch leitende Material kann durch Aufdampfen, durch Sputtern, durch einen galvanischen oder sonstigen dem Fachmann dieses Gebietes bekannten physikalisch/chemischen Prozeß auf ein Substrat aufgebracht werden.

Dadurch, daß der Meßwiderstand und der Referenzwiderstand sich auf einem gemeinsamen Substrat befinden und von demselben elektrisch leitenden Material derselben Dicke gebildet werden, ist gewährleistet, daß sie angenähert auf der gleichen Temperatur gehalten werden und ein ähnliches Temperaturverhalten aufweisen.

Das Referenzelement kann jedoch auch anders gestaltet sein. Denkbar ist beispielsweise eine elektronische Stufe, die von einem Temperaturfühler ein Signal über die Temperatur des Meßwiderstandes erhält und daraufhin eine Spannung abgibt, die dem Temperaturverhalten des Meßwiderstandes annähern gleich ist.

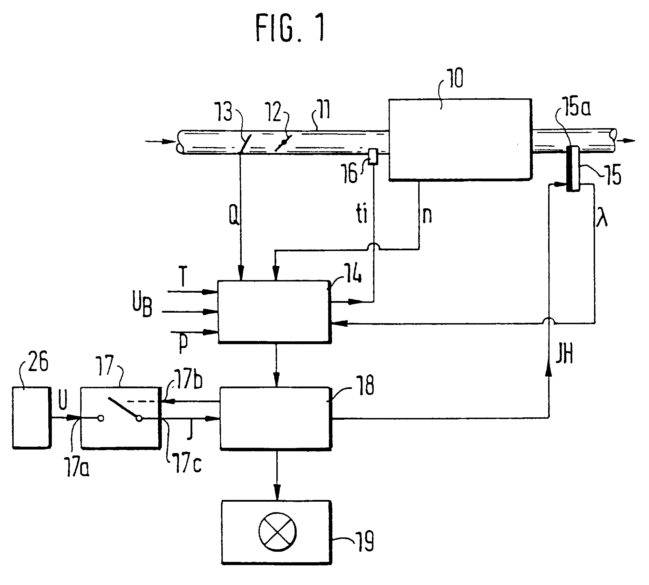

Bevor auf die Erfindung näher eingegangen wird, wird ausdrücklich darauf hingewiesen, daß das in Figur 1 dargestellte, die Erfindung anhand diskreter Schaltstufen angegebene Blockschaltbild die Erfindung nicht beschränkt, sondern insbesondere dazu dient, die funktionellen Grundwirkungen der Erfindung zu veranschaulichen und spezielle Funktionsabläufe in einer möglichen Realsierungsform anzugeben. Es versteht sich, daß die einzelnen Bausteine und Blöcke in analoger, digitaler oder auch hybrider Technik aufgebaut sein können. Ferner ist es auch möglich, daß sie ganz oder teilweise zusammengefaßt, entsprechende Bereiche von programmgesteuerten digitalen Systemen, beispielsweise Mikrorechner, Mikroprozessoren, digitaler oder analoge Logikschaltungen und dergleichen umfassen können. Die folgenden Beschreibungen sind daher lediglich als bevorzugtes Ausführungsbeispiel bezüglich des funktionellen Gesamt- und Zeitablaufs zu werten, wobei die Hinweise auf die jeweiligen Schaltungsblöcke aus Gründen eines besseren Verständnisses erfolgen.

In Figur 1 ist eine Brennkraftmaschine 10 dargestellt mit ihrem Ansaugbereich 11, in dem sich u. a. eine Drosselklappe 12 befindet, durch deren Auslenkung aus der Ruhestellung die Luftmenge bestimmt wird, die der Brennkraftmaschine 10 zugeführt wird. Ein Luftmengenmesser 13, der diese Luftmenge mißt, gibt ein Ausgangssignal Q an eine elektronische Steuereinheit 14, die üblicherweise ein Mikrorechner mit Mikroprozessor, zugeordnetem Speicher sowie Stromversorgung ist und weitere Betriebszustandsdaten empfangt wie

- die Drehzahl n der Brennkraftmaschine,
- das der Brennkraftmaschine zugeführten Luft/Kraftstoffverhältnis, das durch das Ausgangssignal einer Abgassonde, hier speziell einer Lambdasonde 15, die im Abgaskanal der Brennkraftmaschine angeordnet ist und eine Ist-Wert-Angabe über den jeweiligen Betriebszustand der Brennkraftmaschine, genauer über den Sauerstoffgehalt im Abgas vermittelt, bestimmt wird.

Aus diesen Daten und einer Vielzahl weiterer zugeführter Informationen wie Temperatur (T), Luftdruck (p) und dergleichen ($U_{BAT}$, ...) erstellt die elektronische Steuereinheit 14 ein mit hoher Genauigkeit errechnetes Ausgangssignal, bei einer Kraftstoffeinspritzanlage beispielsweise einen Einspritzsteuerbefehl ti zur Ansteuerung von mit 16 im Ansaugbereich symbolisch dargestellten Einspritzventilen.

Die Abgassonde 15 ist mit einer Sondenheizung 15a ausgestattet, die durch ein Schaltelement 17 gesteuert, mit einer Spannungsquelle 26 verbunden werden kann, die die Abgassonde mit elektrischer Leistung versorgt. Die Spannungsquelle ist üblicherweise so gestaltet, daß sie bei Betrieb der Brennkraftmaschine dauernd eingeschaltet ist. Das Schaltelement 17 weist einen Speiseeingang 17a, einen Steuereingang 17b, sowie einen Ausgang 17c auf. Bei Anliegen eines Steuersignals am Eingang 17b wird der Kontakt des Schaltelements 17 geschlossen, so daß an seinem Ausgang 17c eine am Speiseeingang 17a anliegende und von einer Spannungsquelle 26 abgegebene Spannung U auftritt, wenn Übergangswiderstände vernachlässigbar sind.

Zur Durchführung des Diagnoseverfahrens ist ferner ein Diagnoseblock 18 vorgesehen, der in Figur 1 gesondert dargestellt ist, aber auch Teil des zentralen Mikrorechners sein kann. Dieser Diagnoseblock empfängt Signale der elektronischen Steuereinheit 14 und gibt Steuersignale an das Schaltelement 17, das mit dem Ausgang einer Spannungsquelle 26 verbunden ist, ab. Der Diagnoseblock 18 gibt weiterhin Ergebnisse der Diagnose an eine Anzeigevorrichtung 19 ab und umfaßt Speicher, in die Werte der empfangenen Signale und der von ihm ermittelten Ergebnisse abgespeichert werden können.

Wird vom Diagnoseblock 18 die Anzeigevorrichtung 19 angesteuert, so läßt diese je nach dem Ergebnis der Diagnose beispielsweise Anzeigelampen aufleuchten. Es versteht sich, daß diese Anzeige grundsätzlich in beliebiger Form, auch als Buchstabendisplay realisiert werden und auch Zwischenwerte der Diagnose anzeigen kann. Weiter ist es auch möglich, daß der Fahrer durch akustische oder andere Signale informiert wird.

Bei Start der Brennkraftmaschine 10 erhält der Diagnoseblock 18 von der elektronischen Steuereinheit 14 einen Befehl, an das Schaltelement 17 einen Impuls abzugeben, so daß die Sondenheizung 15a mit der notwendigen elektrischen Leistung versorgt wird.

Der Strom I, der von der Spannungsquelle 26 durch die Diagnoseeinheit 18 fließt, setzt sich zusammen aus einem Heizstrom IH, der durch die Sondenheizung fließt und aus weiteren Strömen, auf die weiter unten noch näher eingegangen wird. Der Wert des Heizstroms IH wird durch den Diagnoseblock 18 erfaßt und mit vorgegeben Minimalund Maximalwerten verglichen.

Liegt der Heizstrom IH außerhalb des Toleranzbereiches, d.h. unterhalb des Minimaloder oberhalb des Maximalwertes, wird dies durch den Diagnoseblock 18 erkannt und dieser gibt ein Signal an die Anzeigevorrichtung 19 ab, wodurch dem Fahrer ein entsprechender Fehlerzustand signalisiert wird. Weiterhin kann ein Signal an das Stellglied 17 abgegeben werden, so daß die Spannungsquelle 26 von dem Zuleitungssystem der Sondenheizung getrennt wird.

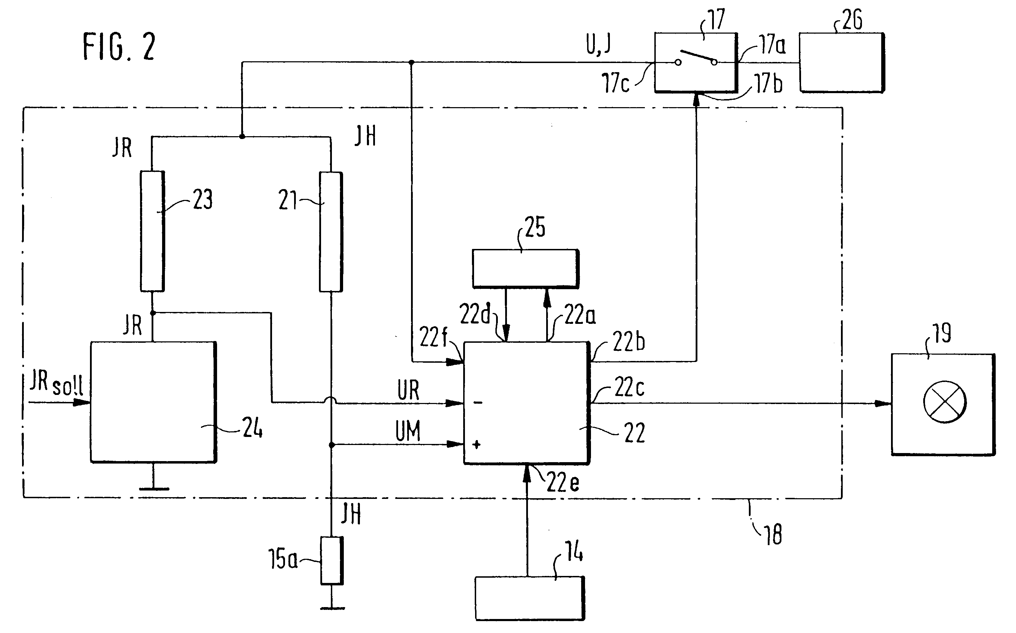

Figur 2 zeigt eine bevorzugte Ausführungsform des Diagnoseblocks 18. Dieser enthält einen Meßwiderstand 21, der nach außen mit seinem einen Ende an das Schaltelement 17 und mit seinem anderen Ende an einen positiven Eingang eine Vergleichsstufe 22 verbunden ist, die Teil des Diagnoseblocks 18 ist, verbunden. Eine Referenzwiderstand 23 ist mit seinem einen Ende ebenfalls mit dem Schaltelement 17 verbunden und mit seinem anderen Ende sowohl an eine Konstantstromquelle 24 als auch an dem negativen Eingang der Vergleichsstufe 22 verbunden.

Der von der Konstantstromquelle eingeprägte Strom IR wird auf einen Sollwert IRSoll eingeregelt, der von außen vorgegeben werden kann. Die Vergleichsstufe 22 weist drei Ausgänge auf, wobei der erste Ausgang 22a mit einem Speicher 25 der zweite Ausgang 22b mit dem Steuereingang 17b des Schaltelementes 17 und der dritte Ausgang mit der Anzeigevorrichtung 19 verbunden ist. Weiterhin ist ein Eingang 22d, durch den der Inhalt des Speichers 25 eingelesen werden kann, ein Eingang 22e, über den Signale der elektronischen Steuereinheit 14 zur Vergleichsstufe 22 gelangen, und ein Eingang 22f vorhanden, an dem die auch an dem gemeinsamen Anschluß der Widerstände 21, 23 anliegende Spannung U anliegt.

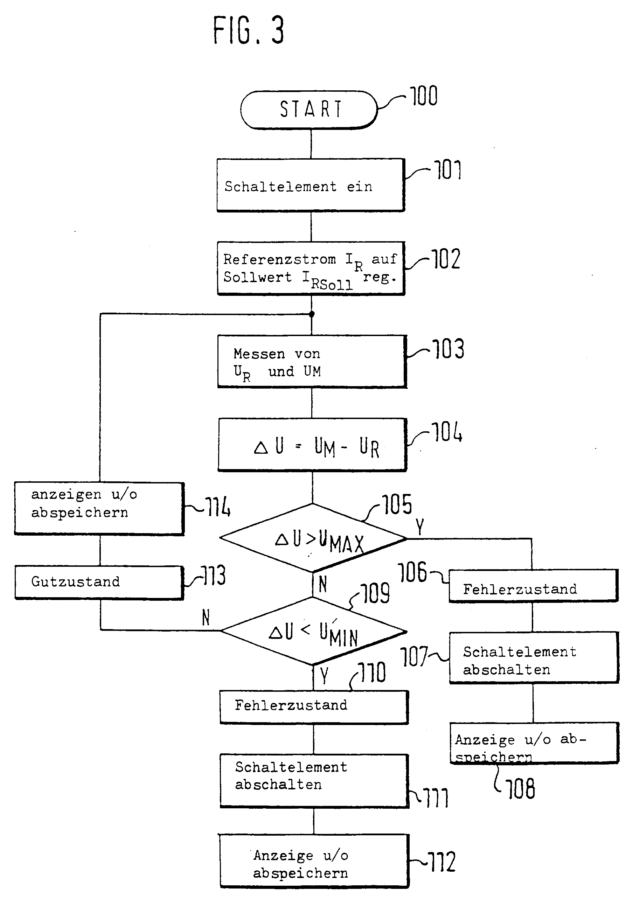

Der Ablauf des erfindungsgemäßen Verfahrens und die Funktion der erfindungsgemäßen Vorrichtung werden anhand von Figur 3 erläutert. Bei Start der Brennkraftmaschine (Schritt 100) wird von der elektronischen Steuereinheit 14 ein Startsignal an die Vergleichsstufe 22 abgegeben. Daraufhin wird durch ein Steuersignal der Vergleichsstufe 22 an das Schaltelement 17 dieses geschlossen, so daß an dem gemeinsamen Anschluß des Meßwiderstandes 21 und des Referenzwiderstandes 23 die Spannung U der Spannungsquelle 25 anliegt, wenn Übergangswiderstände vernachlässigt werden können. Durch den Meßwiderstand 21, der in Serie mit der Sondenheizung 15a geschaltet ist, fließt im wesentlichen der Heizstrom IH, da der in den positiven Eingang der Vergleichsstufe 22 fließende Strom vernachlässigt werden kann.

Da der Referenzwiderstand mit seinem zweiten Anschluß an die Konstantstromquelle 24 angeschlossen ist, fließt - nach einer gewissen Einschwingzeit - durch ihn der von der Konstantstromquelle bestimmte Strom IR, der dem Sollwert IRSoll im wesentlichen entspricht (Schritt 102).

Anschließend wird die Spannung UM, die an dem Meßwiderstand 21 abfällt, wenn durch ihn der Heizstrom IH fließt, sowie die Spannung UR, die an dem Referenzwiderstand 23 abfällt, wenn durch ihn der Referenzstrom IR fließt, durch die Vergleichsstufe 22 gemessen. (Schritt 103) und es wird eine Differenz $\Delta U = UM - UR$ durch die Vergleichsstufe 22 gebildet (Schritt 104).

Es sei an dieser Stelle nochmals darauf hingewiesen, daß die Referenzspannung auch von einer elektronischen Stufe abgegeben werden kann, die ein Signal erhält, das ein Maß ist für die Temperatur des Meßwiderstandes und daraufhin eine Spannung abgibt, das das gleiche Temperaturverhalten aufweist wie die an dem Meßwiderstand abgefallene Spannung UM.

In Schritt 105 wird die Differenz $\Delta U$ mit einen höchst zulässigen Maximalwert MAX verglichen. Ist $\Delta U$ größer als MAX, fährt das erfindungsgemäße Verfahren fort mit Schritt 106, wo ein Fehlerzustand erkannt wird. Dieser Fehlerzustand läßt auf einen zu großen Heizstrom IH schließen, der beispielsweise durch einen Kurzschluß in der Sondenheizung 15a oder dem zu ihr führenden Leitungssystem verursacht werden kann. Möglich ist aber auch, daß die Spannung U ab Spannungsquelle 26 oberhalb eines höchst zulässigen Wertes liegt, wodurch dann ein zu großer Strom durch die Sondenheizung fließen kann.

Anschließend folgt Schritt 107, in dem ein Signal der Vergleichsstufe 22 an das Schaltelement 17 abgegeben wird, wodurch dieses die Spannungsquelle 26 von dem Diagnoseblock 18 und damit auch von der Sondenheizung 15a trennt. In Schritt 108 werden von der Vergleichsstufe 22 Signale an die Anzeigevorrichtung 19 und/oder den Speicher 25 abgegeben, wodurch der Fehlerzustand dem Fahrer signalisiert bzw. im Speicher 25 abgespeichert werden kann.

Ergibt Schritt 105 jedoch, daß $\Delta U$ nicht größer als MAX ist, erfolgt im Schritt 109 ein Vergleich von $\Delta U$ mit einem minimal zulässigen Wert MIN. Ist $\Delta U$ kleiner als MIN, so liegt ein Fehlerzustand derart vor, daß der Heizstrom IH zu klein ist, was auf eine Leitungsunterbrechung zur oder in der Sondenheizung 15a, auf hohe Übergangswiderstände, beispielsweise bei in der Zeichnung nicht dargestellten Verbindungen, oder eine zu geringe Spannung U der Spannungsquelle 26 schließen läßt (Schritt 110).

Durch ein Signal der Vergleichsstufe 22 wird das Schaltelement 17 abgeschaltet (Schritt 111), wodurch die Verbindung der Spannungsquelle 25 mit dem Diagnoseblock 18 und damit auch der Sondenheizung 15a unterbrochen wird.

Auch das Ergebnis dieses Fehlerzustandes kann dem Fahrer signalisiert oder im Speicher 25 abgespeichert werden (Schritt 112).

Ergibt die Abfrage in Schritt 109, daß $\Delta U$ größer oder gleich MIN ist, so liegt $\Delta U$ und damit auch der Heizstrom IH in dem vorgegebenen Toleranzbereich (MIN, MAX), so daß ein Gutzustand vorliegt (Schritt 113). Auch dieses kann dem Fahrer angezeigt oder in Speicher 25 abgespeichert werden (Schritt 114).

Um nicht sofort an die Grenzen der Speicherkapazität des Speichers 25 zu gelangen, müssen in Schritt 114 nicht sämtliche Gutzustände dauerhaft abgespeichert werden, sondern lediglich der, beziehungsweise die letzten.

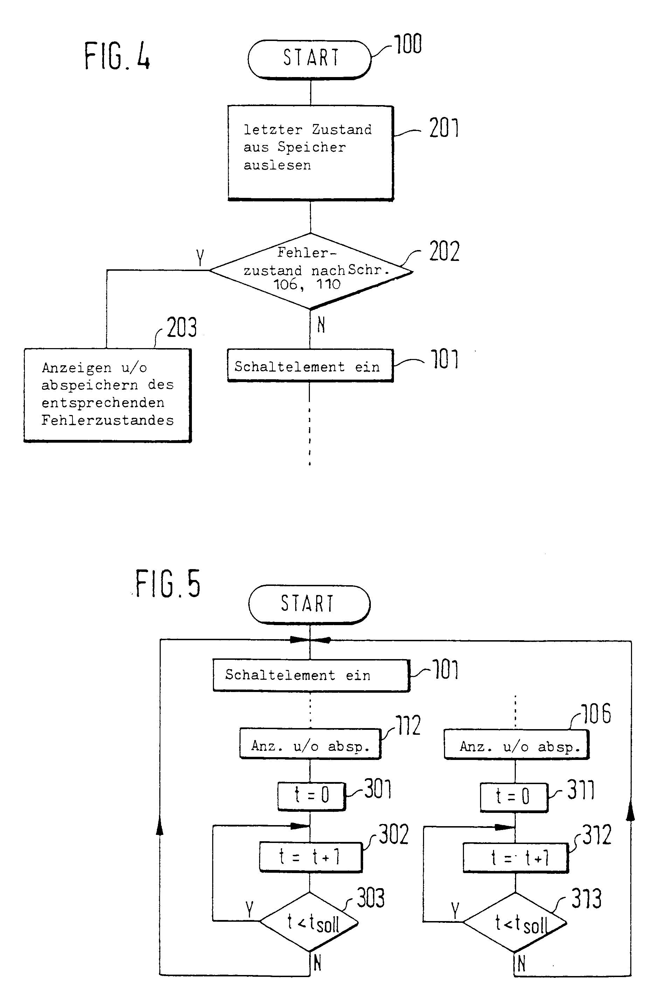

Bei einer Variante des genannten Ausführungsbeispiels werden zwischen den Schritten 100 und 101 Zwischenschritte eingefügt (Figur 4), um den, beziehungsweise die letzten Zustände aus den Schritten 106, 110 oder 113 vor Abschalten der Brennkraftmaschine abzufragen und vor Einschalten des Schaltelementes 17 (Schritt 101) auszuwerten.

Die in Figur 4 dargestellte Variante startet ebenfalls bei Schritt 100 mit dem Start der Brennkraftmaschine. In Schritt 201 wird der letzte Zustand (Fehler-/Gut-Zustand) aus Speicher 25 ausgelesen und in Schritt 202 wird abgefragt, ob es sich um einen Fehlerzustand nach Schritt 106 beziehungsweise Schritt 110 handelt. Falls ja, erfolgt eine entsprechende Anzeige und/oder (nochmaliges) Abspeichern des vorliegenden Fehlerzustandes. Wird in Schritt 202 kein Fehlerzustand festgestellt, so wird das Verfahren ab Schritt 101 fortgesetzt.

Eine zweite Ausführungsform des erfindungsgemäßen Verfahrens besteht darin, daß nach Anzeigen/Abspeichern eines Fehlerzustandes gemäß der Schritte 108, beziehungsweise 112 das Schaltelement 17 nach einer bestimmten Zeit nochmals eingeschaltet wird und das Verfahren gemäß der bereits beschriebenen ersten Version entsprechend weiterläuft.

Dazu ist in der Vergleichsstufe 22 ein Zeitglied integriert, das nach Ablauf einer vorgegebenen Zeit das Verfahren ab Schritt 101 erneut startet. Die Ergänzungen des Flußdiagramms werden durch Figur 5 gezeigt.

Nach Schritt 112 folgt ein Schritt 301, indem ein Zeitzähler auf Null gesetzt wird. In Schritt 302 wird dieser um eins erhöht (inkrementiert) und in Schritt 303 wird abgefragt, ob eine vorgegebene Zeit tSoll bereits vergangen ist. Falls nein, so gelangt das Verfahren erneut zum Schritt 302. Diese Schleife wird sooft durchlaufen, bis t = tSoll ist. Dann gelangt das erfindungsgemäße Verfahren zum Schritt 101, wodurch der bereits anhand der Figur 3 beschriebene Ablauf erneut gestartet wird.

Analoges gilt für den Verlauf ab Schritt 106. Die hier genannten Schritte 311 bis 313 entsprechen den Schritten 301 bis 303.

Der Sinn dieses Ausführungsbeispiels liegt darin, daß es, beispielsweise durch Überhitzung vorkommen kann, daß der Heizstrom IH nur zeitweilig außerhalb der vorgegebenen Grenzen MIN, MAX liegt.

Besonders bei Überhitzung ist ein zeitweiliges Ausschalten des Heizstromes IH daher notwendig.

Es wird ein System zur Überwachung der Funktionsfähigkeit einer Sonden-Heizeinrichtung vorgestellt, die aus einer Sondenheizung, einer Einrichtung, die die Sondenheizung mit der notwendigen elektrischen Leistung versorgt und aus den entsprechenden Zuleitungen besteht. Der Kern der Erfindung liegt darin, daß der Heizstrom für eine Sondenheizung an einem in Serie zur Sondenheizung geschalteten Meßwiderstand eine Meßspannung verursacht, die mit einer weiteren Spannung verglichen wird, die abgegeben wird von einem Referenzelement. Diese befindet sich auf einer ähnlichen Temperatur wie der Meßwiderstand oder erhält ein Meßsignal, das der Temperatur des Meßwiderstandes entspricht und gibt eine Spannung ab, die einen ähnlichen Temperaturverlauf aufweist wie die Meßspannung. Durch Vergleich dieser beiden Spannungen ist es möglich, auf den durch die Sondenheizung fließenden Strom und damit auf die Funktionsfähigkeit der Sonden-Heizeinrichtung zu schließen, ohne mit der Sondenheizung einen zu hohen Widerstand in Serie zu schalten.

## Patentansprüche

1. Verfahren zur Überwachung der Funktionsfähigkeit einer Sonden-Heizeinrichtung, die mindestens aus einer Sondenheizung (15a), mindestens einer Einrichtung (26), die die Sondenheizung (15a) mit der nötigen elektrischen Leistung versorgt, und den dazugehörigen Zuleitungen besteht, für eine Abgassonde (15), die zur Regelung des Luft/Kraftstoff-Verhältnisses eines einer Brennkraftmaschine (10) zugeführten Luft/Kraftstoff-Gemisches dient, wobei ein durch die Heizeinrichtung fließender Heizstrom (IH) mittels einer an einem Meßwiderstand (21) abfallenden Spannung (UM) erfaßt wird und mit einer von einem Referenzelement (23, 24) abgegebenen Spannung verglichen wird, wobei das Referenzelement (23, 24) gleiches Signalverhalten wie der Meßwiderstand aufweist und dann, wenn der Vergleich ein Überschreiten eines Plausibilitätsintervalls (UMIN, UMAX) ergibt, auf einen entsprechenden Fehlerzustand der Sonden-Heizeinrichtung geschlossen und ein entsprechendes Fehlersignal abgegeben wird.

2. Verfahren nach Anspruch 1, dadurch gekennzeichnet, daß der Heizstrom IH erfaßt wird, in dem die von ihm an einem zur Sondenheizung in Serie geschalteten Meßwiderstand verursachte Spannung UM verglichen wird mit einer Spannung UR, die durch ein Referenzelement abgegeben wird, das auf einer ähnlichen Temperatur gehalten wird wie der Meßwiderstand oder ein Signal erhält, das der Temperatur des Meßwiderstandes entspricht, und dessen Spannung UR ein ähnliches Temperaturverhalten wie die Spannung UM aufweist.

3. Verfahren nach Anspruch 1 oder 2, dadurch gekennzeichnet, daß das Referenzelement als Referenzwiderstand gestaltet ist, dem ein konstanter Strom eingeprägt wird, und daß der Referenzwiderstand und der Meßwiderstand als Schichtwiderstände ausgebildet sind, die sich beide auf einem gemeinsamen Substrat befinden.

4. Verfahren nach einem der Ansprüche 1 bis 3, dadurch gekennzeichnet, wenn der Wert des Heizstroms IH innerhalb der vorgegebenen Werte liegt, ein Gutzustand bestimmt und ein entsprechendes Signal abgegeben wird und daß die möglichen Signale bezüglich des Gutzustandes und/oder eines eventuellen Fehlerzustandes dem Fahrer optisch und/oder akustisch signalisiert und/oder in einem Speicher abgelegt werden könnnen.

5. Verfahren nach einem der Ansprüche 1 bis 4, dadurch gekennzeichnet, daß im Falle eines Fehlerzustandes durch das Fehlersignal die Sondenheizung von der Einrichtung, die sie mit der nötigen elektrischen Leistung versorgt, getrennt wird.

6. Verfahren nach einem der Ansprüche 4 oder 5, dadurch gekennzeichnet, daß nach dem Starten der Brennkraftmaschine zunächst Werte aus dem Speicher ausgelesen werden, die auf einen Gut- bzw. Fehler-Zustand der Heizeinrichtung während der vorausgegangenen Betriebsphase schließen lassen und daß in Abhängigkeit von den ausgelesenen Werten die Abgassonde mit den Einrichtungen, die sie mit elektrischer Leistung versorgen, verbunden wird.

7. Verfahren nach einem der Ansprüche 1 bis 6, dadurch gekennzeichnet, daß bei Auftreten eines Fehlerzustandes die Sondenheizung nur für eine vorgegebene Zeit von der Einrichtung, die sie mit der elektrischen Leistung versorgt, getrennt wird.

8. Vorrichtung zur überwachung der Funktionsfähigkeit einer Sonden-Heizeinrichtung, die mindestens aus einer Sondenheizung (15a), mindestens einer Einrichtung (26), die die Sondenheizung (15a) mit der nötigen elektrischen Leistung versorgt, und den dazugehörigen Zuleitungen besteht, für eine Abgassonde (15), die zur Regelung des Luft/Kraftstoff-Verhältnisses eines einer Brennkraftmaschine (10) zugeführten Luft/Kraftstoff-Gemisches dient, wobei ein Diagnoseblock (18) vorgesehen ist, der den durch die Heizeinrichtung fließender Heizstrom (IH) mittels einer an einem Meßwiderstand (21) abfallenden Spannung (UM) erfaßt und mit einer von einem Referenzelement (23, 24) abgegebenen Spannung vergleicht, wobei das Referenzelement (23, 24) gleiches Signalverhalten wie der Meßwiderstand aufweist und dann, wenn der Vergleich ein Überschreiten eines Plausibilitätsintervalls (UMIN, UMAX) ergibt, auf einen entsprechenden Fehlerzustard der Sonden-Heizeinrichtung schließt und ein entsprechendes Fehlersignal abgibt.

9. Vorrichtung nach Anspruch 8, dadurch gekennzeichnet, daß der Diagnoseblock 18 folgende Mittel enthält:
   - ein zur Sondenheizung (15a) in Serie geschalteter Meßwiderstand (21), an dem bei Vorhandensein eines Heizstromes IH eine Spannung UM abfällt,
   - ein Referenzelement (23, 24), das auf einer ähnlichen Temperatur wie der Meßwiderstand (21) gehalten wird oder dem ein Signal zugeführt wird, das der Temperatur des Meßwiderstandes entspricht, und eine Referenzspannung UR abgibt, die ein ähnliches Temperaturverhalten aufweist wie die Spannung UM,
   - eine Vergleichsstufe (22), die die Spannungen UM und UR mißt, einen Differenzwert aus UM und UR bildet und dann, wenn der Differenzwert außerhalb vorgegebener Werte (MIN, MAX) liegt auf einen entsprechenden Fehlerzustand schließt und ein entsprechendes Signal abgibt.

10. Vorrichtung nach Anspruch 8 oder 9, dadurch gekennzeichnet, daß das Referenzelement als Referenzwiderstand (23) gestaltet ist, dem durch eine Konstantstromquelle (24) ein konstanter Strom eingeprägt wird, und daß der Referenzwiderstand (23) und der Meßwiderstand (21) als Schichtwiderstände ausgebildet sind, die sich beide auf einem gemeinsamen Substrat befinden.

11. Vorrichtung nach einem der Ansprüche 8 bis 10, dadurch gekennzeichnet, daß die Vergleichsstufe (22) auf einen Gutzustand schließt und ein entsprechendes Signal abgibt, wenn der Differenzwert innerhalb der vorgegebenen Werte (MIN, MAX) liegt und daß die Signale bezüglich des Gutzustandes und/oder eines eventuellen Fehlerzustandes dem Fahrer durch eine Anzeigevorrichtung (19) optisch und/oder akustisch signalisiert und/oder in einem Speicher (25) abgespeichert werden.

12. Vorrichtung nach einem der Ansprüche 9 bis 11, dadurch gekennzeichnet, daß ein Schaltelement (17) vorgesehen ist, das bei Auftreten eines Fehlersignales die Sondenheizung (15a) von der Einrichtung (26), die sie mit der nötigen elektrischen Leistung versorgt, trennen.

13. Vorrichtung nach einem der Ansprüche 8 bis 12, dadurch gekennzeichnet, daß die Vergleichsstufe (22) Mittel aufweist, die nach dem Starten der Brennkraftmaschine zunächst Werte aus dem Speicher (25) auslesen, die auf Gut- bzw. Fehlerzustände der Heizeinrichtung während der vorausgegangenen Betriebsphase schließen lassen und daß die Vergleichsstufe (22) ein Signal zur Ansteuerung des Schaltelementes (17) abgibt in Abhängigkeit von den ausgelesenen Werten.

14. Vorrichtung nach einem der Ansprüche 8 bis 13, dadurch gekennzeichnet, daß die Vergleichsstufe (22) ein Zeitglied aufweist, durch das bei Auftreten eines Fehlersignales und Abschalten des Schaltelementes (17) dieses nach einer vorgegebenen Zeit wieder eingeschaltet wird.

**Claims**

1. Method for monitoring the operational capability of a probe heating device which consists of a probe heater (15a), at least one device (26) which supplies the probe heater (15a) with the necessary electrical power, and the associated feed lines, for an exhaust gas probe (15) which serves to control the air/fuel ratio of an air/fuel mixture which is fed to an internal combustion engine (10), a heating current (IH) which flows through the heating device being detected by means of a voltage (UM) which drops across a measuring resistor (21) and being compared with a voltage which is output by a reference element (23, 24), the reference element (23, 24) having the same signal behaviour as the measuring resistor and, when the comparison results in a plausibility interval (UMIN, UMAX) being exceeded, it is concluded that a corresponding fault state of the probe heating device is present and a corresponding fault signal is output.

2. Method according to Claim 1, characterized in that the heating current IH is detected in that the voltage UM which is brought about by it at a measuring resistor which is connected in series with the probe heater is compared with a voltage UR which is output by a reference element which is kept at a similar temperature as the measuring resistor or receives a signal which corresponds to the temperature of the measuring resistor and whose voltage UR has a similar temperature behaviour to that of the voltage UM.

3. Method according to Claim 1 or 2, characterized in that the reference element is designed as a reference resistor on which a constant current is impressed, and in that the reference resistor and the measuring resistor are constructed as film resistors which are both located on a common substrate.

4. Method according to one of Claims 1 to 3, characterized in that, if the value of the heating current IH lies within the predetermined values, a satisfactory state is determined and a corresponding signal is output, and in that the possible signals relating to the satisfactory state and/or a possible fault state can be signalled to the driver visually and/or acoustically and/or can be stored in a memory.

5. Method according to one of Claims 1 to 4, characterized in that, in the event of a fault state as a result of the fault signal, the probe heater is disconnected from the device which supplies it with the necessary electric power.

6. Method according to one of Claims 4 or 5, characterized in that, after the internal combustion engine starts, values which permit conclusions to be drawn as to a satisfactory state or fault state of the heating device during the preceding operating phase are initially read out of the memory, and in that, as a function of the values read out, the exhaust gas probe is connected to the devices which supply it with electric power.

7. Method according to one of Claims 1 to 6, characterized in that, when a fault state occurs, the probe heater is only disconnected for a predetermined time from the device which supplies it with the electric power.

8. Device for monitoring the operational capability of a probe heating device which consists of at least one probe heater (15a), at least one device (26) which supplies the probe heater (15a) with the necessary electric power, and the associated feed lines, for an exhaust gas probe (15) which serves to control the air/fuel ratio of an air/fuel mixture which is fed to the internal combustion engine (10), a diagnosis block (18) being provided which detects the heating current (IH) flowing across the heating device by means of a voltage (UM) which drops across a measuring resistor (21), and compares it with a voltage output by a reference element (23, 24), the reference element (23, 24) having the same signal behaviour as the measuring resistor and, if the comparison results in a plausibility interval (UMIN, UMAX) being exceeded, the said reference element (23, 24) concludes that a corresponding fault state of the probe heating device is present and outputs a corresponding fault signal.

9. Device according to Claim 8, characterized in that the diagnosis block 18 contains the following means:
   - a measurung resistor (21) which is connected in series with the probe heater (15a) and across which a voltage UM drops when a heating current IH is present,
   - a reference element (23, 24) which is kept at a similar temperature to that of the measuring resistor (21) or to which a signal is fed which corresponds to the temperature of the measuring resistor, and outputs a reference voltage UR which has a similar temperature behaviour to that of the voltage UM,
   - a comparison stage (22) which measures the voltages UM and UR, forms a difference value from UM and UR and, if the difference value lies outside predetermined values (MIN, MAX) concludes that a corresponding fault state is present and outputs a corresponding signal.

10. Device according to Claim 8 or 9, characterized in that a reference element is designed as a reference resistor (23) on which a constant current is impressed by means of a constant current source (24), and in that the reference resistor (23) and the measuring resistor (21) are constructed as film resistors which are both located on a common substrate.

11. Device according to one of Claims 8 to 10, characterized in that the comparison stage (22) concludes that a satisfactory state is present and outputs a corresponding signal if the difference value lies within the predetermined values (MIN, MAX), and in that the signals relating to the satisfactory state and/or a possible fault state are signalled to the driver visually and/or acoustically by means of a display device (19) and/or are stored in a memory (25).

12. Device according to one of Claims 9 to 11, characterized in that a switching element (17) is present which, when a fault signal occurs, disconnects the probe heater (15a) from the device (26) which supplies it with the necessary electric power.

13. Device according to one of Claims 8 to 12, characterized in that the comparison stage (22) has means which, after the internal combustion engine starts, initially reads values, which allow conclusions to be drawn as to satisfactory states or fault states of the heating device during the preceding operating phase, from the memory (25), and in that the comparison stage (22) outputs a signal for driving the switching element (17) as a function of the values read out.

14. Device according to one of Claims 8 to 13, characterized in that the comparison stage (22) has a timing element by means of which the switching element (17) is switched on again after a predetermined time when a fault signal occurs and the said switching element (17) is switched off.

**Revendications**

1. Procédé de surveillance du bon fonctionnement d'une installation de chauffage de sonde comprenant au moins un chauffage de sonde (15a), au moins une installation (26) qui fournit la puissance électrique nécessaire au chauffage de sonde (15a), et des lignes d'alimentation correspondantes, pour une sonde de gaz d'échappement (15) servant à la régulation du rapport air/carburant d'un mélange air/carburant alimentant un moteur thermique (10), un courant de chauffage (IH) traversant l'installation de chauffage étant détecté par la tension (UM) aux bornes d'une résistance de mesure (21), pour être comparé à la tension fournie par un élément de référence (23, 24), l'élément de référence (23, 24) ayant le même comportement de signal que la résistance de mesure, et lorsque la comparaison montre un dépassement d'un intervalle de plausibilité (UMIN, UMAX), on conclut à un état de défaut de l'installation de chauffage de la sonde et on fournit un signal d'erreur correspondant.

2. Procédé selon la revendication 1, caractérisé en ce que l'on détecte le courant de chauffage (IH) en comparant la tension (UM) obtenue aux bornes d'une résistance de mesure branchée en série sur le chauffage de la sonde, et on compare à une tension (UR) fournie par un élément de référence maintenu à une température analogue à celle de la résistance de mesure ou qui contient un signal correspondant à la température de la résistance de mesure, et dont la tension (UR) a un comportement en température analogue à celui de la tension (UM).

3. Procédé selon la revendication 1 ou 2, caractérisé en ce que l'élément de référence est en forme de résistance de référence à laquelle on applique un courant constant, et en ce que la résistance de référence et la résistance de mesure sont des résistances en couche qui se trouvent sur un substrat commun.

4. Procédé selon l'une des revendications 1 à 3, caractérisé en ce que lorsque la valeur du courant de chauffage (IH) se situe à l'intérieur d'une valeur prédéterminée, cela définit un état de bon fonctionnement et correspond à l'émission d'un signal approprié, et en ce que les signaux possibles quant au bon fonctionnement et/ou à un éventuel état de défaut, sont signalés optiquement et/ou acoustiquement au conducteur et/ou sont inscrits dans une mémoire.

5. Procédé selon l'une des revendications 1 à 4, caractérisé en ce que, dans le cas d'un état défectueux, le signal de défaut coupe le chauffage de sonde de l'installation qui lui fournit la puissance électrique nécessaire.

6. Procédé selon l'une des revendications 4 ou 5, caractérisé en ce qu'après le démarrage du moteur à combustion interne, on prend tout d'abord dans la mémoire des valeurs qui permettent de conclure à un bon fonctionnement ou à un état de défaut de l'installation de chauffage pendant la phase de fonctionnement précédente, et en ce qu'en fonction des valeurs lues, on relie la sonde de gaz d'échappement aux installations qui lui fournissent la puissance électrique.

7. Procédé selon l'une des revendications 1 à 6, caractérisé en ce qu'à l'arrivée d'un état de défaut, le chauffage de la sonde n'est coupé de l'installation que pendant une durée prédéterminée, installation qui lui fournit la puissance électrique.

8. Dispositif de surveillance du bon fonctionnement d'une installation de chauffage de sonde comprenant au moins un chauffage de sonde (15a), au moins une installation (26) qui fournit la puissance électrique nécessaire au chauffage de sonde (15a), et des lignes d'alimentation correspondantes pour la sonde de gaz d'échappement (15) servant à la régulation du rapport air/carburant d'un mélange air/carburant alimentant un moteur à combustion interne (10), avec un bloc de diagnostic (18) qui détecte le courant de chauffage (IH) traversant l'installation de chauffage à l'aide de la tension (UM) aux bornes d'une résistance de mesure (21) et compare cette tension à une tension fournie par un élément de référence (23, 24), cet élément de référence (23, 24) ayant le même comportement pour le signal que la résistance de mesure et, si la comparaison traduit un dépassement d'un intervalle de plausibilité (UMIN, UMAX), l'installation conclut à un état de défaut correspondant de l'installation de chauffage de sonde et fournit un signal de défaut approprié.

9. Dispositif selon la revendication 8, caractérisé en ce que le bloc de diagnostic (18) comprend les moyens suivants :
   - une résistance de mesure (21) branchée en série sur un chauffage de sonde (15a), et donnant une tension (UM) lorsqu'il y a un courant de chauffage (IH),
   - un élément de référence (23, 24) maintenu à une température analogue à celle de la résistance de mesure (21) ou recevant un signal correspondant à la température de la résistance de mesure et fournissant une tension de référence (UR) ayant un comportement en température analogue à celui de la tension (UM),
   - un étage de comparaison (22) mesurant les tensions (UM et UR) et formant une différence entre UM et UR et, si la différence se situe en dehors de valeurs prédéterminées ($U_{MIN}$, $U_{MAX}$), concluant à l'état de défaut correspondant et fournissant un signal approprié.

10. Dispositif selon la revendication 8 ou 9, caractérisé en ce que l'élément de référence est une résistance de référence (23) qui reçoit un courant constant d'une source de courant constant (24) et en ce que la résistance de référence (23) et la résistance de mesure (21) sont des résistances en couche qui se trouvent toutes deux sur un même substrat.

11. Dispositif selon l'une des revendications 8 à 10, caractérisé en ce que l'étage de comparaison (22) conclut à un bon fonctionnement et fournit un signal correspondant si la valeur de la différence se situe dans des limites prédéterminées ($U_{MIN}$, $U_{MAX}$), et fournit des signaux correspondant au bon fonctionnement et/ou à un éventuel état de défaut, vers le conducteur, par un dispositif d'affichage (19), de manière optique et/ou acoustique, et/ou les enregistre dans une mémoire (25).

12. Dispositif selon l'une des revendications 9 à 11, caractérisé par un élément de commutation (17) qui, à l'arrivée d'un signal de défaut, coupe le chauffage de sonde (15a) par rapport à l'installation (26) qui lui fournit la puissance électrique nécessaire.

13. Dispositif selon l'une des revendications 8 à 12, caractérisé en ce que l'étage de comparaison (22) comprend des moyens qui, après le démarrage du moteur thermique, lisent tout d'abord dans la mémoire (25) des valeurs permettant de conclure au bon fonctionnement ou à une situation de défaut de l'installation de chauffage pendant la phase de fonctionnement précédente, et en ce que l'étage de comparaison (22) émet un signal de commande de l'élément de commutation (17) en fonction des valeurs lues.

14. Dispositif selon l'une des revendications 8 à 13, caractérisé en ce que l'étage de comparaison (22) comporte un élément de temporisation qui, à l'arrivée d'un signal de défaut et après coupure de l'élément de commutation (17), rebranche celui-ci après un temps prédéterminé.

# FIG. 1

FIG. 2

EP 0 506 668 B1

## FIG. 3

```
        ┌─────────────┐
        │    START    │──── 100
        └──────┬──────┘
               │
        ┌──────┴────────┐
        │ Schaltelement │──── 101
        │      ein      │
        └──────┬────────┘
               │
        ┌──────┴──────────────┐
        │ Referenzstrom I_R auf│──── 102
        │ Sollwert I_RSoll reg.│
        └──────┬──────────────┘
               │
        ┌──────┴──────┐
        │  Messen von │──── 103
        │  U_R  und UM│
        └──────┬──────┘
               │
        ┌──────┴──────┐
        │ ΔU = UM - UR│──── 104
        └──────┬──────┘
```

Block 114: anzeigen u/o abspeichern — 114

Block 113: Gutzustand — 113

Decision 105: $\Delta U > U_{MAX}$ — 105, Y / N

Block 106: Fehlerzustand — 106

Decision 109: $\Delta U < U_{MIN}$ — 109, N / Y

Block 110: Fehlerzustand — 110

Block 107: Schaltelement abschalten — 107

Block 111: Schaltelement abschalten — 111

Block 108: Anzeige u/o abspeichern — 108

Block 112: Anzeige u/o abspeichern — 112

$$\Delta U = U_M - U_R$$

$$\Delta U > U_{MAX}$$

$$\Delta U < U_{MIN}$$

FIG. 4

START — 100

letzter Zustand
aus Speicher
auslesen — 201

Fehlerzustand nach Schr.
106, 110 — 202

Y

N

Anzeigen u/o
abspeichern des
entsprechenden
Fehlerzustandes — 203

Schaltelement ein — 101

FIG. 5

START

Schaltelement ein — 101

Anz. u/o absp. — 112

t = 0 — 301

t = t+1 — 302

t < t_{soll} — 303

Y

N

Anz. u/o absp. — 106

t = 0 — 311

t = t+1 — 312

t < t_{soll} — 313

Y

N